# EUROPÄISCHE PATENTSCHRIFT

(11) **EP 0 926 466 B1**
(45) Veröffentlichungstag und Bekanntmachung des Hinweises auf die Patenterteilung: **27.02.2002**
(21) Anmeldenummer: 98811116.7
(22) Anmeldetag: 09.11.1998
(51) Int. Cl.: G01C 15/00

(54) **Baulaser**
Construction laser
Laser pour la construction

(30) Priorität: 23.12.1997 DE 19757532
(43) Veröffentlichungstag der Anmeldung: 30.06.1999
(73) Patentinhaber: HILTI Aktiengesellschaft, 9494 Schaan (LI)
(72) Erfinder: Kousek, Heinz, Dr., 6800 Feldkirch (AT)
(74) Vertreter: Wildi, Roland

(56) Entgegenhaltungen:
- EP-A- 0 559 489
- GB-A- 2 200 474
- US-A- 4 973 158

## Beschreibung

Die Erfindung betrifft einen Baulaser mit rotierendem Laserstrahl gemäss dem Oberbegriff des Patentanspruchs 1.

Baulaser mit rotierendem Laserstrahl werden vor allem in der Bauindustrie, im Installations- und Elektrohandwerk und im damit verwandten Gewerbe als Hilfsmittel eingesetzt, um auf Decken, Wänden und Böden horizontale oder vertikale Linien festzulegen bzw. um im Raum horizontal oder vertikal verlaufende Ebenen exakt zu definieren. Dies ist beispielsweise für das Ausrichten von Türstöcken und Fenstern und für die Bestimmung eines exakt horizontalen Verlaufs von Leitungen erforderlich. Auch für eine horizontal und vertikal ausgerichtete Anordnung von Befestigungspunkten werden Baulaser als Markierungshilfe eingesetzt.

Baulaser der gattungsgemässen Bauart weisen eine innerhalb eines Gehäuses angeordnete Laserlichtquelle auf, deren emittierter Laserstrahl um eine Drehachse rotierbar ist. Der von der Laserlichtquelle emittierte Laserstrahl wird wenigstens teilweise von einer Umlenkvorrichtung senkrecht zur Drehachse umgelenkt und beschreibt dadurch bei der Rotation eine Ebene. Der Laserstrahl ist mit Hilfe einer Nivellierungseinrichtung in Bezug auf den Untergrund ausrichtbar, damit eine exakt horizontale oder vertikale Lage der vom rotierenden Laserstrahl aufgespannten Ebenen gewährleistet ist. Die Nivellierungseinrichtung kann manuell verstellbar sein; sie kann auch durch Servomotoren unterstützte, automatisch justierende Stellglieder aufweisen. Zur Vereinfachung der Ausrichtung des Laserstrahls bzw. seiner Drehachse sind am Gehäuse Anzeigeeinrichtungen vorgesehen, die dem Anwender die relative Lage der Drehachse im Gehäuse anzeigen. Die Umlenkeinrichtung für den von der Laserlichtquelle emittierten Laserstrahl umfasst eine Anordnung von Spiegeln oder ein Umlenkprisma, vorzugsweise ein Pentaprisma. Die Rotation des Laserstrahls erfolgt beispielsweise durch Drehung der Umlenkeinrichtung.

Bei einer aus dem Stand der Technik bekannten Variante von Baulasern tritt der umgelenkte Laserstrahl durch eine Anordnung von Fenstern aus, die an der Oberseite des Gehäuses des Baulasers angeordnet sind. Die Anordnung der Fenster ist derart gewählt, dass sie den Durchtritt des rotierenden Laserstrahls möglichst in alle Richtungen weitgehend ungehindert freigeben. Die Fenster müssen aus exakt planparallelen Gläsern optischer Güte gefertigt sein, damit der durchtretende Laserstrahl nicht durch Brechung aus der Ebene abgelenkt wird. Die Scheiben werden üblicherweise in der Form eines Polygons zusammengesetzt und bilden einen laternenartigen Aufsatz, der fest mit der Oberseite des Gehäuses des Baulasers verbunden ist. Die Stosskanten der zusammengesetzten Scheiben sind optisch abgedeckt, um störende Reflexe zu vermeiden. Die Abdeckungen sind vorzugsweise von mechanischen Versteifungen des laternenartigen Aufsatzes gebildet. Die Versteifungen sollen gewährleisten, dass der laternenartige Aufsatz auch einen allfälligen Sturz auf die Oberseite des Gehäuses des Baulasers unbeschädigt übersteht. Im Hinblick auf die gewünschte Steifigkeit des laternenartigen Aufsatzes sind an den Fügestellen Stege relativ grosser Breite erwünscht. Andererseits sollen die Stege aber den rotierenden Laserstrahl nicht über einen allzu grossen Bereich abschatten. Die Erfüllung dieser widersprüchlichen Forderungen vergrössert den Aufwand für die Herstellung des Aufsatzes; insbesondere die Notwendigkeit von optisch vergüteten Scheiben für alle Fenster und deren exakte Anordnung verteuert die Herstellung. Die Fenster müssen frei von Verschmutzungen gehalten werden, um zu verhindern, dass diese den Laserstrahl abschatten oder sogar als Streuzentren wirken und den Laserstrahl aus der eingestellten Ebene ablenken könnten. Zudem weist der laternenartige Aufsatz wegen seiner geforderten Steifigkeit auch ein relativ grosses Gewicht auf.

Es sind auch Baulaser mit rotierendem Laserstrahl bekannt, z.B. aus GB-A-2 200 474, bei denen die Umlenkeinrichtung in einer von der Oberseite des Gerätegehäuses abragenden, mitumlaufenden Gehäuseeinheit untergebracht ist. Die Gehäuseeinheit ist teilweise oder ganz ausserhalb des eigentlichen Gerätegehäuses angeordnet. Ein in der Seitenwand der Gehäuseeinheit vorgesehenes Fenster erlaubt den Austritt des von der Umlenkeinheit rechtwinklig abgelenkten Laserstrahls. Zur Rotation des Laserstrahls wird die Gehäuseeinheit um ihre Achse rotiert. Die Übertragung der Drehbewegung an die Gehäuseeinheit erfolgt über eine im Inneren des Gerätegehäuses axial verlaufende, motorisch antreibbare Welle, in deren Innerem die Laserlichtquelle mit allfälligen weiteren optischen Komponenten angeordnet ist. Die Welle ist mit der Gehäuseeinheit für die Umlenkeinrichtung drehfest verbunden. Aus Gründen einer Ökonomie der Energieversorgung, die üblicherweise mit Batterien bewerkstelligt wird, sind die Lager der Welle sehr leichtgängig ausgebildet und wird für den Antrieb ein Motor mit geringem Drehmoment eingesetzt. Dieser bekannte Baulaser ist gegenüber den Baulasern mit laternenartigem Aufsatz einfacher in der Konstruktion und billiger in der Herstellung. Er weist bloss ein einzelnes, relativ kleines Fenster auf, das mit einem optischen Glas verschlossen ist und im Betrieb mitumläuft. Der Lichtstrahl wird durch keine Versteifungsstege abgeschattet. Eine allfällige Reinigung des einzelnen Fensters ist relativ leicht durchzuführen. Allerdings weist der Baulaser eine relativ grosse Verletzlichkeit bei mechanischen Belastungen auf. Bei einem Sturz auf die vom Gerätegehäuse abragende Gehäuseeinheit für die Umlenkeinrichtung wird ein resultierender Schlag direkt auf die Welle übertragen. Dadurch können die aus Gründen der Leichtgängigkeit wenig robusten Lager der Welle Schaden nehmen. Bezüglich der optischen Qualität des Laserstrahls ist ein geringer Strahlquerschnitt auf relativ grosse Distanzen gefordert. Dies bedingt ein präzise justiertes optisches System. Durch einen Schlag können die innerhalb der Welle angeordneten optischen Komponenten jedoch in Mitleidenschaft gezogen werden und bezüglich ihrer Justierung Verformungen erleiden, was unmittelbar negative Rückwirkungen auf die optische Strahlqualität des Baulasers hat.

Der vorliegenden Erfindung liegt daher die Aufgabe zugrunde, einen Baulaser zu schaffen, der weitgehend unempfindlich ist gegenüber mechanischen Belastungen. Die optische Strahlqualität soll auch nach einem unbeabsichtigten Sturz des Gerätes erhalten bleiben. Dabei soll der Baulaser einfach und kostengünstig in der Herstellung sein.

Die Lösung dieser Aufgaben besteht in einem Baulaser mit den im Patentanspruch 1 angeführten Merkmalen. Der Baulaser besitzt eine innerhalb eines Gerätegehäuses angeordnete Lichtquelle zur Erzeugung eines Laserstrahls, der um eine Drehachse rotierbar ist. Innerhalb des Gerätegehäuses ist eine motorisch um ihre Achse rotierbare Welle angeordnet, die eine drehschlüssige Verbindung mit einer wenigstens teilweise das Gerätegehäuse überragenden Gehäuseeinheit aufweist, die mit wenigstens einem Lichtaustrittsfenster ausgestattet ist. In der Gehäuseeinheit ist eine Umlenkvorrichtung für den von der Lichtquelle emittierten Laserstrahl untergebracht, die an der Welle befestigt ist. Die Gehäuseeinheit ist gegenüber der Umlenkvorrichtung in axialer und in radialer Richtung begrenzt verschiebbar und weist eine Gehäuseinnenwandung auf, die im Abstand zur Umlenkvorrichtung angeordnet ist.

Indem die Umlenkeinrichtung direkt an der Welle befestigt ist und mit der Gehäuseeinheit nicht in Berührung steht, ist die Voraussetzung geschaffen, die Gehäuseeinheit derart anzuordnen, dass sie zwar mit der Welle drehkoppelbar ist, sonst aber unabhängig und stossentkoppelt von der Welle vorliegt. Auf diese Weise können Schläge von der Welle ferngehalten werden, um die Verletzlichkeit des Gerätes zu reduzieren und die Lager der Welle sowie die optischen Komponenten vor Beschädigungen und Verstellungen zu schützen. Dabei bleibt der prinzipiell einfache und herstellungstechnisch kostengünstige konstruktive Aufbau des Baulasers erhalten.

Bevorzugt ist die Gehäuseeinheit im normalen Betriebszustand in axialem Abstand vom Gerätegehäuse angeordnet. Dadurch kann die Geräteeinheit leichter in radialer Richtung verschoben werden, da Reibungskräfte oder Blockierungen, die bei einer Anlage der Gehäuseeinheit am Gerätegehäuse auftreten könnten, ausgeschaltet sind.

In einer vorteilhaften Variante des Baulasers sind die Gehäuseeinheit und die Welle mit Drehmitnehmem ausgestattet, die im normalen Betriebszustand miteinander in Eingriff stehen und beim Auftreten einer Schlageinwirkung wenigstens teilweise ausser Eingriff bringbar sind. Indem die Drehmitnehmer an der Gehäuseeinheit und der Welle bei einer Schlageinwirkung wenigstens teilweise ausser Eingriff bringbar sind, wird verhindert, dass der Schlag über die Drehmitnehmer auf die Welle übertragen wird. Zudem wird durch diese konstruktive Massnahme im Fall eines Blockierens der Gehäuseeinheit der Antriebsmotor für die Welle geschont. Eine konstruktiv einfache aber wirkungsvolle Lösung für die im Fall eines auftretenden Schlages entkoppelbaren Drehmitnehmer sieht vor, dass die wellenseitigen Drehmitnehmer ein am Umfang der Welle angeordnetes, verzahntes Kegelrad umfassen, während die Drehmitnehmer der Gehäuseeinheit als ringförmig umlaufende Verzahnung ausgebildet sind, die an der Innenfläche eines in die Durchtrittsöffnung des Gerätegehäuses ragenden, konisch verlaufenden Bodenteil mit einer konzentrischen Öffnung angeordnet ist. Das Bodenteil ist durch eine Druckfeder, die sich an einem radial am Umfang der Welle umlaufenden Vorsprung abstützt, gegen das Kegelrad vorgespannt. Dabei ist der Federweg der Druckfeder grösser als der axiale Abstand zwischen der Gehäuseeinheit und dem Gerätegehäuse. Durch die Vorspannung ist im normalen Betriebsfall gewährleistet, dass die Drehmitnehmer miteinander in Eingriff stehen. Im Fall eines Schlags auf die Gehäuseeinheit wird diese gegen die Rückstellkraft der Feder in Richtung auf das Gerätegehäuse gedrückt bis es dort ansteht und den Schlag an das robustere Gerätegehäuse abgibt. Indem der Federweg der Druckfeder grösser ist als der axiale Abstand zwischen der Gehäuseeinheit und dem Gerätegehäuse ist sichergestellt, dass die Druckfeder bloss schlagdämpfend wirkt. Da die Gehäuseeinheit am Gerätegehäuse ansteht bevor die Druckfeder um den vollständigen Federweg komprimiert wird, kann es zu keinem Durchschlagen auf die Welle kommen. Das Bodenteil taucht dabei weiter in die Durchtrittsöffnung im Gerätegehäuse ein. Dadurch kommen die Drehmitnehmer an der Innenseite des Bodenteils und das verzahnte Kegelrad der Welle wenigstens bereichsweise ausser Eingriff. Die Welle wird auf diese Weise bloss durch die Federkraft der Druchfeder belastet, nicht jedoch durch den Schlag auf die Geräteeinheit.

Die Gehäuseeinheit weist in Verlängerung der Seitenwand mit Vorteil einen ringförmigen Stützwulst auf, die das Bodenteil im Anbindungsbereich überragen und mit einem Umfangswulst in Eingriff bringbar sind, der die Durchtrittsöffnung im Gehäuse berandet. Im normalen Betriebszustand ist der radiale Abstand zwischen dem Stützwulst und dem Umfangswulst kleiner als der radiale Abstand zwischen dem Öffnungsrand des Bodenteils und der Welle. Diese vorteilhafte Ausführungsvariante des Baulasers berücksichtigt, dass Schläge nicht allein in axialer Richtung auftreten können, sondern das auch Situationen eintreten können, bei denen es zu einer grösseren seitlichen mechanischen Belastung der Gehäuseeinheit kommen kann. Die daraus resultierende radiale Verschiebung der Gehäuseeinheit wird durch das Zusammenwirken des Stützwulstes und des Umfangswulstes am Gerätegehäuse begrenzt. Insbesondere ist durch die gewählten Abstandsverhältnisse in radialer Richtung sichergestellt, dass die Welle durch den Rand des Bodenteils der Gehäuseeinheit keinen seitlichen Schlag erhalten kann.

Die Lichtquelle für die Laserstrahlung ist bevorzugt innerhalb der Welle angeordnet. Die Anordnung ist dabei derart gewählt, dass die Emissionsrichtung des Laserstrahls innerhalb des Gerätegehäuses mit der Drehachse der Welle zusammenfällt. Durch die Übereinstimmung der Drehachse der Welle und der Emissionsrichtung des Laserstrahls kann der Aufwand für die Umlenkeinrichtung herabgesetzt werden und kann diese einen einfacheren Aufbau aufweisen. Vorzugsweise ist die Umlenkeinrichtung von einem Pentaprisma gebildet.

Im folgenden wird die Erfindung mit ihren erfindungswesentlichen Merkmalen unter Bezugnahme auf ein in den schematischen Zeichnungen dargestelltes Ausführungsbeispiel näher erläutert. Es zeigen:
- Fig. 1: den Anbindungsbereich einer Gehäuseeinheit an das Gerätegehäuse eines Baulasers im teilweisen Axialschnitt; und
- Fig. 2 und Fig. 3: zwei Situationen des Baulasers aus Fig. 1 im teilweisen Axialschnitt, in denen die Gehäuseeinheit einen Schlag empfängt.

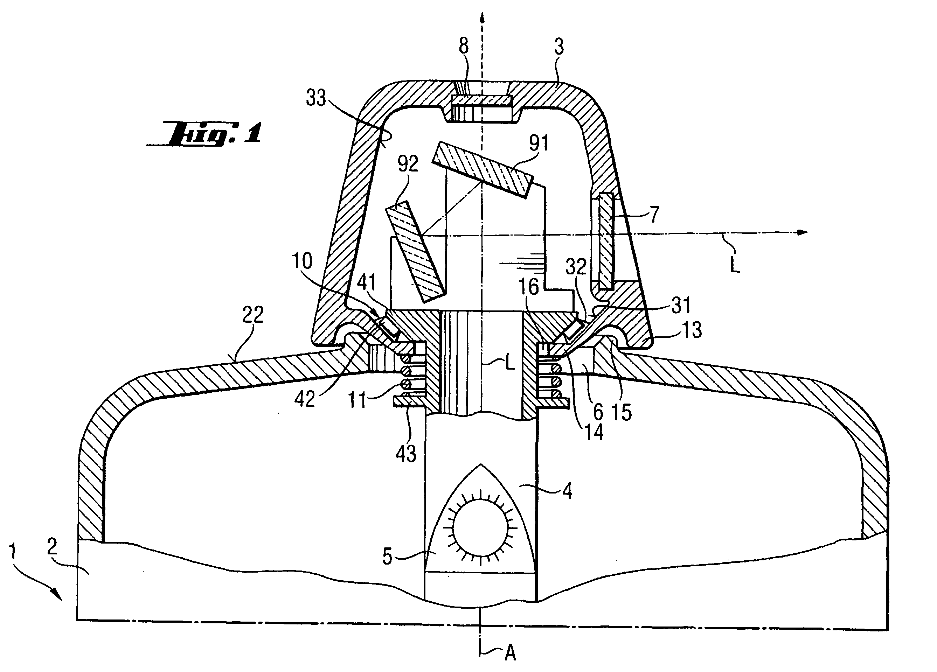

Fig. 1 zeigt den oberen Bereich eines gesamthaft mit 1 bezeichneten, erfindungsgemässen Baulasers, in dem eine helmartige Gehäuseeinheit 3 an ein Gerätegehäuse 2 angebunden ist. Innerhalb des Gerätegehäuses 2 ist eine Welle 4 angedeutet, die motorisch um ihrer Achse A rotierbar ist. Die Welle 4 ist eine Hohlwelle und beherbergt in ihrem Inneren eine Lichtquelle 5 für die Erzeugung eines Laserstrahls L. Die Lichtquelle 5 ist derart angeordnet, dass die Emissionsrichtung des Laserstrahls L mit der Drehachse A der Welle 4 zusammenfällt. Die Welle 4 ragt durch eine Durchtrittsöffnung 6 an der Oberseite 22 des Gerätegehäuses 2. An ihrem aus dem Gerätegehäuse 2 ragenden Ende ist die Welle 4 mit einem Kegelrad 41 verbunden, das eine Verzahnung 42 aufweist. Auf dem Kegelrad 41 ist eine Umlenkvorrichtung 9 angeordnet, die durch Umlenkspiegel 91, 92 symbolisiert ist. Mit Hilfe der Umlenkeinrichtung 9 ist der von der Lichtquelle 5 in Richtung der Achse A emittierte Laserstrahl L um 90° umlenkbar. Der in der Achse A der Welle 5 angeordnete Umlenkspiegel 91 ist gemäss Fig. 1 halbdurchlässig und spaltet den von der Lichtquelle 5 kommenden Laserstrahl in zwei zueinander senkrechte Komponenten auf.

Die Durchtrittsöffnung 6 an der Gehäuseoberseite 22 wird von einer helmartigen Gehäuseeinheit 3 abgedeckt. Die Gehäuseeinheit 3 nimmt die an der Welle 4 befestigte Umlenkvorrichtung 9 auf, ohne dass es dabei zu einer Berührung zwischen der Innenwandung 33 der Gehäuseeinheit 3 und der Umlenkvorrichtung 9 kommt. Lichtaustrittsfenster 7 und 8 erlauben den Durchtritt des abgelenkten Laserstrahls L und seiner nicht abgelenkten Komponente. Ein Lichtaustrittsfenster 7 ist in der Seitenwand der helmartigen Gehäuseeinheit 3 angeordnet. Das zweite Lichtaustrittsfenster ist um 90° versetzt, in Verlängerung der Achse A der Welle 4 an der Stirnseite der Gehäuseeinheit 3 vorgesehen. Die Gehäuseeinheit 3 weist ein Bodenteil 14 auf, das in die Durchtrittsöffnung 6 des Gerätegehäuses 2 ragt und mit einer Öffnung 16 zur Durchführung der Welle 4 versehen ist. Die Innenseite 31 des Bodenteils 14 ist mit einer ringförmigen Verzahnung 32 versehen, die im normalen Betriebsfall mit der Verzahnung 42 des Kegelrades 41 eine drehschlüssige Verbindung eingeht. Zur Gewährleistung der drehschlüssigen Verbindung ist die Gehäuseeinheit 3 von einer Druckfeder 11 gegen das Kegelrad 41 vorgespannt. Die Druckfeder 11 stützt sich dabei an einem ringförmig an der Welle 4 umlaufenden Vorsprung 43 ab.

Wie in Fig. 1 angedeutet, ist die helmartige Gehäuseeinheit 3 im normalen Betriebszustand des Baulasers 1 im axialen Abstand von der Oberseite 22 des Gerätegehäuses 2 angeordnet. Der axiale Abstand ist dabei kleiner als der Federweg der Druckfeder 11. In Verlängerung der Seitenwand der Gehäuseeinheit 3 ragt von der Unterseite des Bodenteils 14 ein ringförmiger Stützwulst 13 ab. Der Stützwulste 13 ist mit einem Umfangswulst 15 in Eingriff bringbar, der die Durchtrittsöffnung 6 im Gerätegehäuse 2 berandet. Im normalen Betriebszustand des Baulasers 1 ist der radiale Abstand zwischen dem Stützwulst 13 und dem Umfangswulst 15 kleiner als der radiale Abstand des Randes der Öffnung 16 im Bodenteil 14 von der Welle 4.

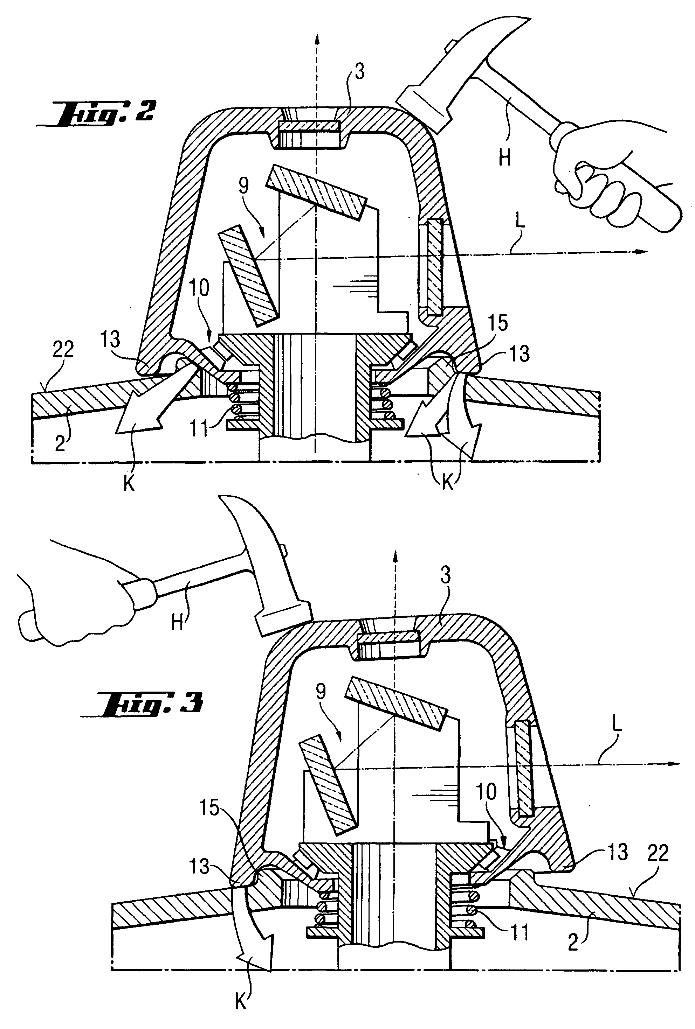

Zur Verdeutlichung der Stossentkopplung zwischen der Gehäuseeinheit 3 und der Welle 4 sind In Fig. 2 und 3 zwei unterschiedliche Situationen angedeutet, in denen die Gehäuseeinheit 3 einem axialen Schlag augesetzt ist. Der Hammer H symbolisiert jeweils eine mechanische Schlageinwirkung. In Fig. 2 kommt die Schlageinwirkung H von rechts oben. Durch die Schlageinwirkung H wird die helmartige Gehäuseeinheit 3 gegenüber der Umlenkvorrichtung 9 sowohl in axialer Richtung als auch in radialer Richtung verschoben. Durch die axiale Verschiebung wird die Druckfeder 11 zusammengepresst. Bevor die Druckfeder 11 den gesamten Federweg zurückgelegt hat, kommt der Stützwulst 13 der Unterseite des Bodenteils 14 der Gehäuseeinheit 3 in Anlage zur Oberseite 22 des Gerätegehäuses 2. Dadurch werden die auftretenden Stosskräfte auf das Gerätegehäuse 2 übertragen, wie durch die Pfeile K angedeutet ist. Durch die axiale Verschiebung kommt die Drehmitnahmeeinrichtung 10 wenigstens bereichsweise ausser Eingriff. Die Schlageinwirkung H besitzt auch eine seitliche, nach links gerichtete Komponente. Dadurch wird die helmartige Geräteeinheit 3 auch in radialer Richtung verschoben. Die radiale Bewegung wird durch den Stützwulst 13 und durch den Umfangswulst 15 begrenzt. Die beiden Wülste 13, 15 kommen rechtzeitig in Anlage und verhindern eine weitere radiale Verschiebung der Gehäuseeinheit 3, bevor der Rand der Öffnung 16 an die Welle 4 anschlagen kann.

Fig. 3 zeigt die Schlagdämpfung bei einem axialen Schlag H, der von links oben auf die Gehäuseeinheit einwirkt. Wiederum kommt es zu einer begrenzten axialen und radialen Verschiebung der helmartigen Gehäuseeinheit. Die durch die Schlageinwirkung H auftretenden Stosskräfte werden durch das Zusammenwirken des Stützwulstes 13 mit der Oberseite 22 des Gerätegehäuses 2 und dem die Durchtrittsöffnung berandenden Umfangswulst 15 auf das Gerätegehäuse abgeleitet, wie durch die Pfeile K angedeutet ist. Durch die Kompression der Druckfeder 11 kommt die Drehmitnahmeeinrichtung 10 zwischen der Welle 4 und der Gehäuseeinheit 3 wenigstens teilweise ausser Eingriff, wie es auf der linken Seite der Welle 4 in Fig. 3 angedeutet ist.

Durch die erfindunggemässe Ausführung der Anbindung der Gehäuseeinheit, in der die Umlenkvorrichtung untergebracht ist, an das Gerätegehäuse des Baulasers können Stosskräfte, beispielsweise durch einen Sturz des Gerätes, wirkungsvoll von der um ihre Achse rotierbaren Welle ferngehalten werden. Die Stosskräfte werden über das Gerätegehäuse abgeleitet; die Welle wird lediglich mit der geringen Federkraft der Druckfeder beaufschlagt. Dadurch werden Beschädigungen der Lager der Welle oder der in der Welle untergebrachten optischen Komponenten wirkungsvoll verhindert.

## Patentansprüche

1. Baulaser mit einer innerhalb eines Gerätegehäuses (2) angeordneten Lichtquelle (5) zur Erzeugung eines Laserstrahls (L), der um eine Drehachse (A) rotierbar ist, und einer innerhalb des Gerätegehäuses (2) angeordneten, motorisch um ihre Achse (A) rotierbaren Welle (4), die eine drehschlüssige Verbindung (10) mit einer wenigstens teilweise das Gerätegehäuse (2) überragenden Gehäuseeinheit (3) aufweist, die mit wenigstens einem Lichtaustrittsfenster (7, 8) ausgestattet ist und in der eine Umlenkvorrichtung (9) für den von der Lichtquelle (5) emittierten Laserstrahl (L) angeordnet ist, **dadurch gekennzeichnet, dass** die Umlenkvorrichtung (9) an der Welle (4) befestigt ist und die Gehäuseeinheit (3) gegenüber der Umlenkvorrichtung (9) in axialer und in radialer Richtung begrenzt verschiebbar ist, wobei sie eine Gehäuseinnenwandung (33) aufweist, die im Abstand zur Umlenkvorrichtung (9) angeordnet ist.

2. Baulaser nach Anspruch 1, **dadurch gekennzeichnet, dass** die Gehäuseeinheit (3) im normalen Betriebszustand in axialem Abstand vom Gerätegehäuse (2) angeordnet ist.

3. Baulaser nach Anspruch 1 oder 2, **dadurch gekennzeichnet, dass** die Gehäuseeinheit (3) und die Welle (4) mit Drehmitnehmern (10) ausgestattet sind, die im normalen Betriebszustand miteinander in Eingriff stehen und beim Auftreten einer Schlageinwirkung wenigstens teilweise ausser Eingriff bringbar sind.

4. Baulaser nach Anspruch 3, **dadurch gekennzeichnet, dass** die wellenseitigen Drehmitnehmer ein am Umfang der Welle (4) angeordnetes, verzahntes Kegelrad (41, 42) umfassen und dass die Drehmitnehmer der Gehäuseeinheit (3) als ringförmig umlaufende Verzahnung (32) ausgebildet sind, die an der Innenseite (31) eines in die Durchtrittsöffnung (6) des Gerätegehäuses (2) ragenden, konisch verlaufenden Bodenteils (14) mit einer konzentrischen Öffnung (16) angeordnet ist, wobei das Bodenteil (14) durch eine Druckfeder (11), die sich an einem radial vom Umfang der Welle (4) abragenden, umlaufenden Vorsprung (43) abstützt, gegen das verzahnte Kegelrad (41, 42) vorgespannt ist und der Federweg der Druckfeder (11) grösser ist als der axiale Abstand zwischen der Gehäuseeinheit (3) und dem Gerätegehäuse (2).

5. Baulaser nach Anspruch 4, **dadurch gekennzeichnet, dass** die Gehäuseeinheit (3) in Verlängerung ihrer Seitenwand einen Stützwulst (13) aufweist, der von der Unterseite des Bodenteils (14) abragt und mit einem Umfangswulst (15) in Eingriff bringbar sind, der die Durchtrittsöffnung (6) im Gerätegehäuse (2) berandet, wobei im normalen Betriebszustand der radiale Abstand zwischen dem Stützwulst (13) und dem Umfangswulst (15) kleiner ist als der radiale Abstand zwischen dem Öffnungsrand des Bodenteils (14) und der Welle (4).

6. Baulaser nach einem der vorangehenden Ansprüche, **dadurch gekennzeichnet, dass** die Lichtquelle (5) derart innerhalb der hohl ausgebildeten Welle (4) angeordnet ist, dass innerhalb des Gerätegehäuses (2) die Emissionsrichtung des Laserstrahls mit der Achse (A) der Welle (4) zusammenfällt.

## Claims

1. Construction laser, comprising a light source (5) inside a device housing (2) for generating a laserbeam (L) which is rotary around a rotary axis (A), and a shaft (4) which is arranged inside the device housing (2) and rotary around its axis (A) by means of a motor and which has a positive rotary connection (10) to a housing unit (3) which projects at least partially over the device housing (2) and which is equipped with at least one light outlet window (7, 8) and wherein is accommodated a diverting device (9) for the laserbeam (L) emitted by the light source (5), **characterised in that** the diverting device (9) is mounted on the shaft (4), and the housing unit (3) is relative to the diverting device (9) to a limited extent axially and radially movable, and it comprises an inner housing wall (33) arranged at a distance from the diverting device (9).

2. Construction laser according to Claim 1, **characterised in that** the housing unit (3) is during a normal operational state arranged at an axial distance from the device housing (2).

3. Construction laser according to Claim 1 or 2, **characterised in that** the housing unit (3) and the shaft (4) are fitted with rotary pickups (10) which are interengaged during a normal operational state and at least partially disengagable in the event of a knock.

4. Construction laser according to Claim 3, **characterised in that** the rotary pickups located at the side of the shaft have at the periphery of the shaft (4) a toothed conical wheel (41, 42), and the rotary pickups of the housing unit (3) are designed as annular peripheral toothing (32) arranged on the inside (31) of a conically extending base part (14) which protrudes into the passage opening (6) of the device housing (2) and which has a concentric opening (16), and the base part (14) is pretensioned against the toothed conical wheel (41, 42) by a pressure spring (11) which supports itself against a peripheral protrusion (43) which projects radially from the periphery of the shaft (4), and the spring path of the pressure spring (11) is greater than the axial distance between the housing unit (3) and the device housing (2).

5. Construction laser according to Claim 4, **characterised in that** the housing unit (3) has in extension of its side wall a support bead (13) which protrudes from the underside of the base part (14) and which is engagable with a peripheral bead (15) which edges the passage opening (6) in the device housing (2), and in a normal operational state the radial distance between the support bead (13) and the peripheral bead (15) is smaller than the radial distance between the opening edge of the base part (14) and the shaft (4).

6. Construction laser according to one of the above claims, **characterised in that** the light source (5) is arranged within the shaft (4) of hollow design in such a manner that the emission direction of the laserbeam inside the device housing 2 coincides with the axis (A) of the shaft (4).

## Revendications

1. Laser pour le bâtiment, comprenant une source lumineuse (5) disposée à l'intérieur d'un boîtier d'appareil (2) pour produire un faisceau laser (L), lequel peut tourner autour d'un axe de rotation (A), et comprenant un arbre (4) qui est disposé à l'intérieur du boîtier d'appareil (2) et peut tourner de manière motorisée autour de son axe (A) et qui comporte une liaison en rotation (10) avec un module de boîtier (3) qui dépasse au moins partiellement du boîtier d'appareil (2), qui est pourvu d'au moins une fenêtre de sortie de lumière (7, 8) et dans lequel est disposé un dispositif de déviation (9) pour le faisceau laser (L) émis par la source lumineuse (5), **caractérisé en ce que** le dispositif de déviation (9) est fixé à l'arbre (4) et -le module de boîtier (3) peut coulisser de manière limitée dans la direction axiale et dans la direction radiale par rapport au dispositif de déviation (9), le module de boîtier (3) comportant une paroi intérieure de boîtier (33) qui est disposée à distance du dispositif de déviation (9).

2. Laser pour le bâtiment selon la revendication 1, **caractérisé en ce que**, en état de fonctionnement normal, le module de boîtier (3) est disposé à distance axiale du boîtier d'appareil (2).

3. Laser pour le bâtiment selon la revendication 1 ou 2, **caractérisé en ce que** le module de boîtier (3) et l'arbre (4) sont munis de moyens d'entraînement en rotation (10) qui, en état de fonctionnement normal, sont en prise mutuelle et, sous l'action d'un choc, peuvent être amenés au moins partiellement hors prise.

4. Laser pour le bâtiment selon la revendication 3, **caractérisé en ce que** les moyens d'entraînement en rotation côté arbre comprennent une roue conique dentée (41, 42) disposée sur la périphérie de l'arbre (4), et **en ce que** les moyens d'entraînement en rotation du module de boîtier (3) sont conçus sous la forme d'une denture périphérique annulaire (32) qui est disposée sur la face intérieure (31) d'une partie de fond de forme conique (14) qui s'engage dans l'ouverture traversante (6) du boîtier d'appareil (2) et qui est pourvue d'une ouverture concentrique (16), la partie de fond (14) étant précontrainte contre la roue conique dentée (41, 42) par un ressort de compression (11) qui prend appui sur une saillie périphérique (43) dépassant radialement de la périphérie de l'arbre (4), et la course élastique du ressort de compression (11) étant supérieure à la distance axiale entre le module de boîtier (3) et le boîtier d'appareil (2).

5. Laser pour le bâtiment selon la revendication 4, **caractérisé en ce que**, dans le prolongement de sa paroi latérale, le module de boîtier (3) comporte un bourrelet d'appui (13) qui dépasse du dessous de la partie de fond (14) et peut être amené en prise avec un bourrelet périphérique (15) qui borde l'ouverture traversante (6) du boîtier d'appareil (2), la distance radiale entre le bourrelet d'appui (13) et le bourrelet périphérique (15) en état de fonctionnement normal étant inférieure à la distance radiale entre le bord d'ouverture de la partie de fond (14) et l'arbre (4).

6. Laser pour le bâtiment selon une des revendications précédentes, **caractérisé en ce que** la source lumineuse (5) est disposée à l'intérieur de l'arbre creux (4), de façon que, à l'intérieur du boîtier d'appareil (2), la direction d'émission du faisceau laser coïncide avec l'axe (A) de l'arbre (4).
